**Europäisches Patentamt**

**European Patent Office**

**Office européen des brevets**

(11) Numéro de publication: **0 046 100**
**B1**

(12) **FASCICULE DE BREVET EUROPEEN**

(45) Date de publication du fascicule du brevet.
**01.02.84**

(51) Int. Cl.³: **F 24 J 3/02**

(21) Numéro de dépôt: **81401197.9**

(22) Date de dépôt: **27.07.81**

(54) **Miroir solaire orientable à panneaux réfléchissants rectangulaires.**

(30) Priorité: **29.07.80 FR 8016682**

(43) Date de publication de la demande:
**17.02.82 Bulletin 82/7**

(45) Mention de la délivrance du brevet:
**01.02.84 Bulletin 84/5**

(84) Etats contractants désignés:
**BE DE GB IT**

(56) Documents cités:
**DE - A - 2 738 602**
**DE - A - 2 738 665**
**DE - A - 2 837 098**
**FR - A - 2 441 188**
**FR - E - 30 769 9**
**US - A - 4 154 219**

(73) Titulaire: **SAINT-GOBAIN VITRAGE, Les
Miroirs 18, avenue d'Alsace, F-92400 Courbevoie (FR)**

(72) Inventeur: **Auger, Henri, 36 avenue du Belloy, F-78110 Le
Vesinet (FR)**
Inventeur: **Acloque, Jean Pierre, 15 La Chataigneraie,
F-95 630 Meriel (FR)**

(74) Mandataire: **Eudes, Marcel et al, Saint-Gobain
Recherche 39 Quai Lucien Lefranc, F-93304 Aubervilliers
Cedex (FR)**

BUNDESDRUCKEREI BERLIN

## Miroir solaire orientable a panneaux reflechissants rectangulaires

L'invention concerne un miroir solaire à surface concave formée de panneaux réfléchissants contigus et à armature rigide.

Plus précisément, l'invention concerne un miroir orientable de ce type, dont la surface réfléchissante est constitutée de facettes rectangulaires allongées, dont les grands côtés sont portés par des éléments cintrés qui leur impriment une courbure cylindrique précise, tandis que leurs petits côtês sont libres.

De tels miroirs sont destinés à équiper en particulier des centrales solaires qui, de façon connue, comprennent un grand nombre de miroirs, habituellement répartis suivant des arcs de cercles concentriques, en vue de réfléchir le rayonnement solaire sur une cible telle qu'une chaudière disposée au centre du champ de miroirs, au sommet d'une tour. Cette chaudière alimente en vapeur une turbine, qui est disposée à la base de la tour et entraîne un générateur électrique. Il est naturellement nécessaire de modifier périodiquement la position de chacun des miroirs, afin que la lumière solaire réfléchie soit toujours projetée sur la chaudière et, dans ce but, les miroirs sont montés sur des socles orientables, qui ajustent automatiquement leur position à intervalles réguliers.

Afin que la tache lumineuse formée par chaque miroir sur le récepteur de la chaudière ne déborde pas des limites de celui-ci, les miroirs doivent avoir une forme proche de celle d'un miroir sphérique de grand rayon.

De tels miroirs doivent répondre à un certain nombre d'impératifs, parmi lesquels les suivants:

—  être relativement peu coûteux, afin que la centrale solaire soit aussi économique que possible;
—  être fiables, afin de limiter les frais de remplacement, d'entretien et de réglage;
—  être assez rigides, pour conserver une forme précise et proche de celle du miroir convergent idéal, malgré les déformations dues au vent, à la chaleur et à leur propre poids;
—  avoir un poids relativement faible, afin de simplifier la conception des organes d'orientation.

Pour respecter ces conditions, il a déjà été proposé, par la Société Saint-Gobain Techniques Nouvelles, dans la demande de brevet français déposée sous le numéro 76 07756 et publiée sous le numéro FR 2 344 852, de réaliser des miroirs convergents, comprenant un châssis qui supporte de éléments réfléchissants, dont l'un au moins est sensiblement cylindrique et résulte de la déformation d'une bande plane rectangulaire, chacun desdits éléments étant disposé sur la châssis de façon à obtenir la convergence désirée et fixé au châssis à l'aide de parcloses en élastomère, qui embrassent à la fois ses grands côtés et des ailes de forme solidaires du châssis.

Pour réaliser de tels miroirs, les bandes réfléchissantes sont déformées sur le chantier même, en exerçant des efforts de flexion tout le long de leurs grands côtés lors de leur mise en place sur le châssis porteur, tandis que les petits côtés sont laissés libres pendant la flexion des grands côtés. Plus précisément, à l'aide d'un gabarit, on impose, sur le chantier, une déformation élastique à un profilé destiné à supporter les parcloses des éléments du miroir et l'on fixe le profilé ainsi déformé sur le châssis du miroir.

Dans la pratique, les miroirs de ce type ainsi réalisés comprennent une armature rigide, orientable par rapport à un bâti ancré au sol et porteuse d'une ossature plane portant elle-même des profilés en T, par exemple disposés selon les lignes verticales ou horizontales, formant des cintres que leur mise en forme amène sur la sphère de référence. Une machine de pose roulant sur des rails courbes et munie d'un gabarit disposé dans un plan vertical permet de placer et de fixer chaque profilé sur une poutrelle dans la position voulue, après l'avoir cintré à la courbure désirée.

Ceci permet certes le montage rapide de chaque miroir, mais exige une infrastructure lourde et coûteuse. Ce processus présente aussi l'inconvénient de ne pouvoir être mis en oeuvre que sur les lieux mêmes d'installation du miroir.

Pour remédier à cet inconvénient, on a déjà proposé des miroirs solaires du même type, mais dont les éléments réfléchissants sont portés par des éléments cintrés préfabriqués, qu'il suffit ensuite d'assembler sur le lieu de montage du miroir, avant de poser les éléments réfléchissants, puis d'effectuer les réglages nécessaires, sans utiliser sur le chantier même une machine permettant de mettre en forme les profilés.

A cet effet, la Société Saint-Gobain Industries a proposé, dans sa demande de brevet publiée FR 2 422 974, du 10 Avril 1978, et dans la demande de premier certificat d'addition FR 2 441 188, du 10 Novembre 1978, un miroir solaire comprenant une armature rigide, orientable par rapport à un bâti fixe, porteuse d'une ossature comprenant des solives formées de poutrelles parallèles, munies de profilés cintrés à la courbure du miroir, sur lesquels sont assemblées une pluralité de facettes réfléchissantes rectangulaires, dont les grands côtés sont solidaires des profilés cintrés, avantageusement par l'intermédiaire de parcloses souples, tandis que leurs petits côtés sont libres, un cintre destiné à supporter au moins un élément réfléchissant étant fixé sur chacune desdites solives, une partie au moins de celles-ci étant identiques entre elles et montées selon un profil transversal aux cintres correspondant lui-même à la courbure du miroir.

Dans ce miroir, les cintres sont fixés par l'intermédiaire de profilés auxiliaires à section en T, dont la table repose sur les poutrelles et dont l'âme comporte une fente longitudinale dans laquelle est engagée et fixée l'âme du cintre.

Il est ainsi possible de monter les profilés auxiliaires en usine sur les poutrelles, de manière à constituer, par leur âme fendue, des étriers, dont la fente peut être rendue rectiligne grâce à un système de réglage approprié. Les cintres, avantageusement en T, sont ensuite montés et conformés, toujours en usine, dans les étriers ainsi réalisés, grâce à un gabarit. On obtient de cette manière des ensemble de solives munies de cintres, qu'il ne reste plus ensuite qu'à assembler aux autres constituants du châssis sur le lieu même d'installation du miroir.

Les solives sont assemblées sur les poutres de l'armature par l'intermédiaire d'axes munis d'organes de réglage permettant, longitudinalement, d'ajuster la distance entre leur poutrelle et l'armature, radialelement, de corriger les positions respectives des panneaux à la surface du miroir. De façon plus précise, les poutrelles constituant les solives sont assemblées sur lesdites poutres à l'aide d'axes ou goujons d'assemblage sensiblement perpendiculaires aux directions longitudinales de la poutre et de la poutrelle associée. Chaque goujon d'assemblage, rigidement solidaire de la poutrelle, traverse un boîtier à l'intérieur duquel il repose sur one portée horizontale, de façon à y reporter le poids des panneaux réfléchissants et de leur ossature réglable, et vient s'engager dans un organe de fixation muni de moyens de réglage articulés permettant l'ajustage dans sa direction axiale et le pivotement transversal des solives.

La présente invention vise à proposer un miroir solaire du même type que ce dernier, mais moins coûteux que celui-ci et dans lequel le réglage en position des solives par rapport à l'armature soit plus facile à effectuer sur le lieu de montage du miroir.

Le but de l'invention est donc un miroir solaire, dont l'armature se réduit à une unique poutre horizontale, avec des solives formées de membrures réglables en position dans leur seul plan, perpendiculairement à l'axe de la poutre porteuse.

Plus particulièrement, l'invention a pour objet un miroir solaire à panneaux réfléchissants rectangulaires contigus, comprenant une armature rigide orientable par rapport à un bâti fixe et porteuse de solives formées de membrures parallèles entre elles, munies de profilés cintrés à la courbure du miroir, supportant eux-mêmes les grands côtés des panneaux, ce miroir étant caractérisé en ce que ladite armature est constituée d'une unique poutre porteuse d'axe perpendiculaire auxdites membrures et en ce que lesdites membrures comportent au moins un moyen de réglage en distance, par coulissement dans leur plan, par rapport à ladite poutre et au moins un moyen de réglage en position angulaire, par pivotement dans leur plan, par rapport à ladite poutre.

Avantageusement, le moyen de réglage en distance et le moyen de réglage en position angulaire des membrures constitueront un seul et même moyen comprenant, sur chaque membrure, deux glissières par rapport auxquelles sont montées coulissantes avec possibilité de verrouillage en position, deux joues solidaires de ladite poutre, deux vis-tirants coopérant avec des écrous étant prévues sur ladite membrure pour régler sa position par rapport auxdites joues.

Chacune de ces joues sera par exemple équipée de deux vis traversant la glissière associée. Dans un premier temps, on réglera la distance de ladite membrure à ladite poutre, ou, plus précisément, à son axe de pivotement, en vissant ou dévissant simultanément les deux vis-tirants par rapport aux joues de la poutre. Puis, on procédera au réglage angulaire en vissant l'une des vis-tirants et au besoin en dévissant l'autre. Lorsque la membrure sera dans la position désirée, on immobilisera enfin les glissières par rapport aux joues de la poutre, en verrouillant à l'aide d'écrous les vis montées coulissantes dans les glissières.

Le réglage en position angulaire de la membrure par rapport à la poutre à l'aide d'organes rigides et à direction fixe tels que des vis-tirants n'est bien entendu possible que parce que le déplacement angulaire de la membrure est très faible et ne joue que sur quelques degrés, ce qui est possible au prix d'une légère déformation des organes rigides. Afin de faciliter le réglage angulaire de la poutrelle, l'axe de l'une des vis-tirants passera, de préférende, au voisinage immédiat de l'axe de pivotement du miroir.

La poutre joue un rôle passif de caisson dans ce réglage et peut naturellement avoir une section absolument quelconque, circulaire, carrée ou autre. Les bras des membrures reposent sur cette poutre sans qu'il soit nécessaire de procéder à un réglage en hauteur plus précis de leur position.

Alors que les solives du miroir orientable faisant l'objet des demandes précitées, FR 2 422 974 et FR 2 441 188 étaient non seulement mobiles dans leur plan, mais orientables, les membrures du miroir selon la présente invention sont seulement mobiles dans leur plan, perpendiculairement au plan du miroir. Afin de conférer à l'ensemble un degré de liberté supplémentaire, les profilés cintrés (ou »cintres«), qui supportent les grands côtés des panneaux réfléchissants et qui sont portés par des profilés auxiliaires des membrures formant étriers, ne sont plus rigidement fixés sur ces profilés auxiliaires mais en sont solidaires par une série d'articulations souples comprenant un axe, engagé dans une lumière de l'âme du cintre, et deux rondelles élastiques, interposées respectivement entre les branches de l'étrier et ladite âme.

Comme dans les demandes de brevet précitées, les profilés cintrés auront avantageusement une section en T, dont les ailes supporteront les panneaux réfléchissants par l'intermédiaire d'une parclose souple et dont l'âme sera engagée dans une fente ou un évidement des porfilés auxiliaires formant étriers. Les profilés cintrés seront cambrés en atelier et percés, après cambrage, aux emplacements destinés au passage des axes de pivotement sur les étriers. Lors de la mise en place des profilés cintrés sur les étriers, il suffira de les fixer de proche en proche sur ces étriers pour leur restituer leur cambrure initiale. Les membrures ainsi équipées des cintres peuvent ensuite être transférées sur le chantier de montage du miroir, où elles sont mises en place sur la poutre porteuse et amenées à l'aide d'un gabarit à une position proche de leur position définitive par rapport à celle-ci. Le réglage final de la position des membrures est ensuite réalisé, comme décrit dans les demandes précitées, en utilisant un laser équipé d'un prisme tournant, pour définir un plan de référence, vis-à-vis duquel on règle la position de chaque membrure en amenant dans ce plan de référence des mires électroniques solidaires des cintres successifs.

Comme décrit également dans les demandes de brevet précitées, on réunira avantageusement les différentes membrures par des câbles perpendiculaires les traversant, des organes de tension solidaires desdits câbles étant prévus sur ceux-ci pour solliciter en direction l'une de l'autre les membrures situées suivant deux côtés parallèles du miroir, en vue d'amener tous les panneaux réfléchissants en butée dans les gorges des parcloses, pour rendre indéformable l'ensemble ainsi constitué et faire participer les panneaux réfléchissants à la rigidité de la structure.

Les dessins annexés illustrent une forme de mise en oeuvre de l'invention. Sur ces dessin:

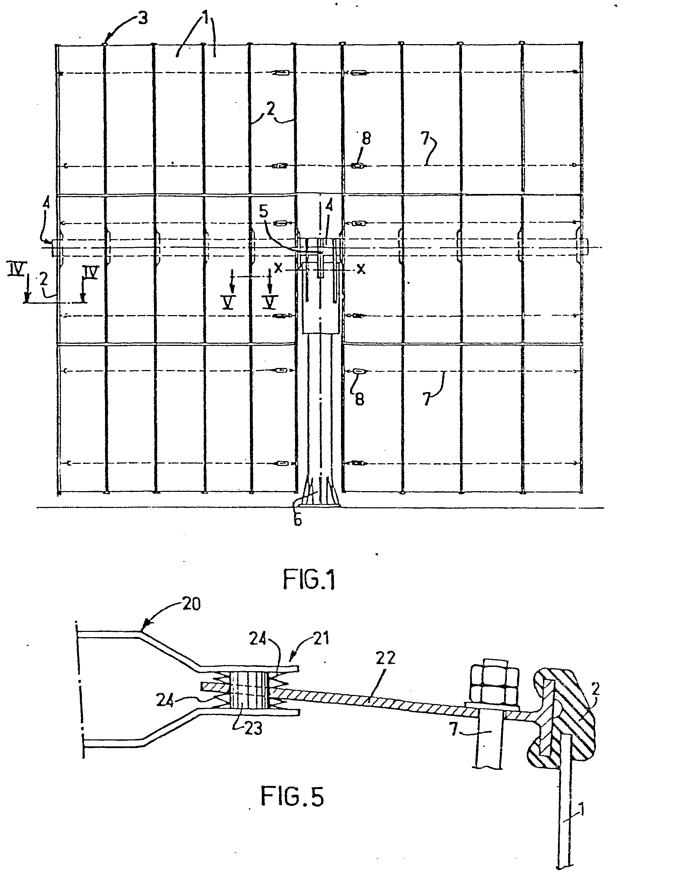

La figure 1 est une vue en élévation d'un miroir solaire conforme à l'invention;

La figure 2 est une vue partielle à plus grande échelle d'une membrure, illustrant le réglage en position de cette membrure par rapport à la poutre porteuse;

La figure 3 est une coupe à plus grande échelle selon la ligne III-III de la figure 2;

Les figures 4 et 5 sont deux coupes transversales partielles, suivant les lignes IV-IV et V-V de la figure 1, perpendiculairement au plan du moroir, illustrant le montage respectivement d'un cintre supportant deux panneaux réfléchissants contigus et d'un cintre disposé suivant un bord du miroir et ne supportant qu'un panneau réfléchissant;

Les figures 6 à 8 illustrent le prècambrage d'un cintre et le perçage des lumières de passage des axes de fixation sur les étriers;

Les figures 9 et 10 illustrent, en coupe transversale et de bout, la mise en place de ces aces de fixation et des rondelles élastiques dans les lumières des cintres;

La figure 11 est une en élévation latérale d'une membrure, tandis que les figures 12 et 13 sont des vues schématiques illustrant la mise en place du cintre sur le profilé formant étrier qui fait partie intégrante de cette membrure;

Les figures 14 et 15 illustrent le réglage approximatif de la position des membrures par rapport à la poutre porteuse;

La figure 16 est une vue en perspective illustrant le réglage final de la position des membrures à l'aide d'un laser équipé d'un prisme tournant.

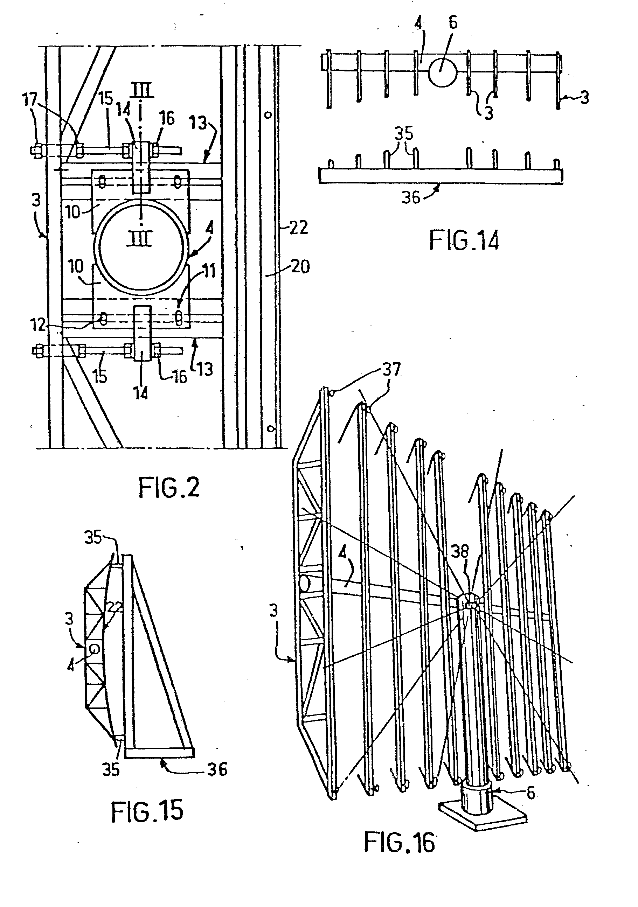

Le miroir conforme à l'invention comprend une pluralité de panneaux réfléchissants rectangulaires 1, supportés suivant leurs grands côtés par des parcloses souples 2 en élastomère, elles-mêmes portées d'une manière qui sera décrite ci-après plus en détail par des membrures 3 essentiellement constituées treillis de poutrelles, que l'on voit mieux sur les figures 2, 11, 12, 15 et 16. Ces membrures 3 sont perpendiculaires au plan des panneaux 1 et sont solidaires d'une unique poutre 4, à section circulaire, qui constitue l'armature du miroir. La poutre 4 est perpendiculaire aux membrures 3 et est montée pivotante aux extrémités du bras 5 autour d'un axe horizontal X-X, par rapport à la partie supérieure d'un bâti-tournant vertical 6. De façon connue en soi, des câbles tendeurs 7, munis de lanternes 8, permettant d'exercer une traction sur leurs extrémités, réunissent les membrures 3 constituant les bords latéraux du miroir, pour former avec les panneaux réfléchissants 1 et les parcloses 2 un ensemble rigide indéformable.

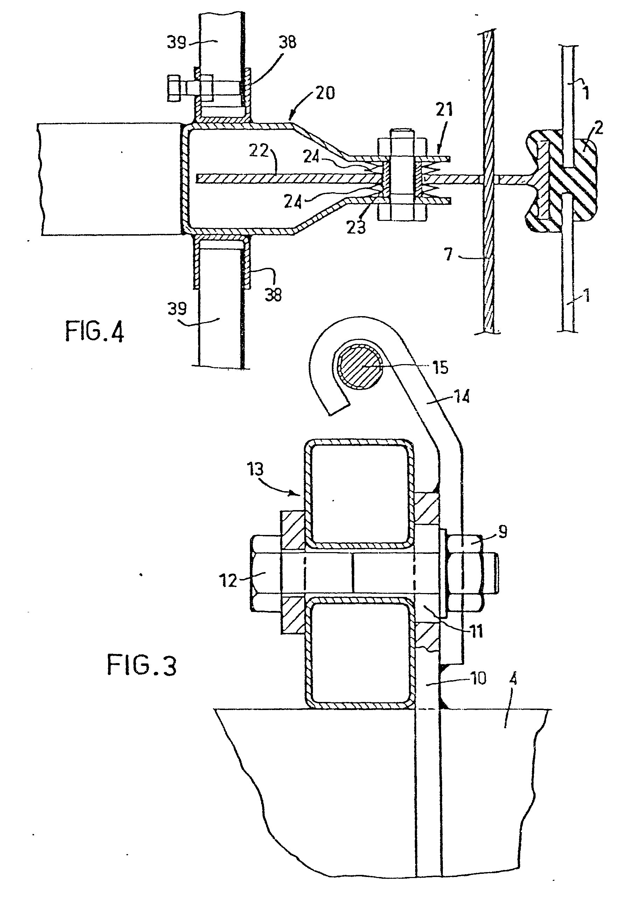

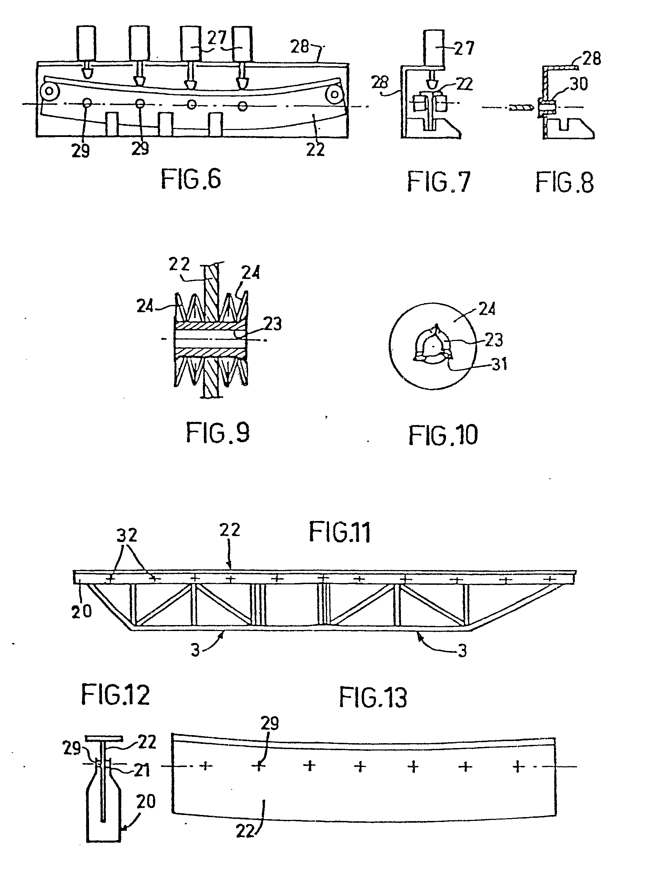

Conformément à l'invention, la poutre 4 porte, au niveau de chaque membrure 3, deux joues 10, présentant chacune deux lumières oblongues 11, dans lesquelles sont engagées des vis 12, montées coulissantes dans des glissières 13 de la membrure 3, dispossées de part et d'autre de la poutre 4. Il est ainsi possible d'immobiliser les glissières 13 et les vis 12 en toute position relative en vissant sur ces vis des écrous 9 (figures 2 et 3). Deux pattes 14, solidaires des joues 10, coiffent par une partie en forme de crochet deux vis-trirants 15 portées par la membrure 3 et sont rendues prisonnières de ces vis par des écrous 16, vissés sur celles-ci de part et d'autre de la partie en forme de crochet. De façon analogue, les vis-tirants 15 sont rendues solidaires de la membrure 3 par des écrous 17.

Il est ainsi possible de déplacer la membrure 3 par rapport à la poutre 4, de manière à ajuster avec précision sa position vis-à-vis de cette poutre. Dans un premier temps, en vissant ou en dévissant simultanément les deux vis-tirants 15, on procède à un réglage en distance de la position de la membrure 3 par rapport à un point de référence prédéterminé. Puis, en vissant l'une des vistirants 15 et en dévissant l'autre, on peut faire pivoter la membrure 3 d'un angle relativement faible pour régler sa position angulaire sans modifier à nouveau la distance. Avantageusement, dans ce but, l'axe de la vis-tirant inférieure, perpendiculaire à l'axe X-X de pivotement du miroir, passera au voisinage immédiat de cet axe, de façon que le réglage angulaire s'effectue à l'aide de la seule vis-tirant supérieure.

La structure des membrures 3 ne sera pas décrite en détail et l'on indiquera simplement qu'elles sont constitiées de poutrelles formant un treillis rigide, qui apparaît schématiquement sur la figure 11. Comme on le voit mieux sur les figures 4 et 5, la partie de la membrure contiguë à la face arrière des panneaux réfléchissants 1 comprend une poutrelle creuse 20 dont une partie fendue 21 forme étrier. Dans cet étrier 21 est engagée l'âme d'un profilé cintré à section en T, 22, dont les branches portent les parcloses 2.

L'âme du profilé 22 est traversée par des axes 23 alignés, solidaires des deux branches de l'étrier 21 et vis-à-vis desquels le profilé 22 peut pivoter ou s'incliner. Entre les deux branches de l'étrier 21 l'âme du profilé sont disposées des rondelles élastiques 24. Le profilé cintré 22 et la membrure 3 sont ainsi réunis par une liaison souple, permettant au profilé d'adopter la position la plus favorable lorsque les câbles 7 sont tendus pour amener les bords des panneaux réfléchissants 1 au fond de leur logement des parcloses 2.

On notera que le profilé 20 supporte également, par l'intermédiaire de profilés en U 38, des tôles 39 disposées à l'arrière des panneaux réfléchissants 1, afin de protéger la couche réfléchissante déposée sur la face arrière de ceux-ci.

Les opèrations de prècintrage en usine des profilés 22 au profil désiré pour le miroir, de mise en place des profilés 21 sur les membrures 3 et des montage et réglage des diverses membrures vont maintenant être décrites en référence aux figures 6 à 16.

Comme on le voit sur la figure 6, les profilés en T 22 sont d'abord cambrés en usine au profil désiré, à l'aide de vérins 27 portés par un support 28. Chaque profilé 22 étant dans la position cintrée désirée, on le perce alors de lumières 29 alignées à travers des canons de perçage 30 (figure 8), prévus à intervalles réguliers dans le support 28. Ces lumières 29 sont destinées au passage des axes 23 d'articulation des profilés 22 sur les étriers 21 l'on procède donc ensuite à la mise en place de ces axes 23 et des rondelles élastiques 24 sur les profilés 22 (figures 9 et 10). On notera que les extrémités des axes 23 sont légèrement évasées par sertissage en 31, après leur mise en place, pour rendre les rondelles 24 imperdables.

Les profilés 20 des membrures 3 sont ensuite percés de lumières 32 alignées, destinées à être amenées en regard des lumières 29 des profilés en T 22. En introduisant ensuite l'âme de ces profilés dans la partie 21 formant étrier des profilés 20 (figures 11 à 13), en amenant successivement en correspondance les axes 23 et les lumières 32 de l'étrier et en fixant de proche en proche les différents axes à l'aide de boulons et d'écrous, il est possible de restituer au profilé 22, sur la membrure 3, sa cambrure initiale.

Les diverses membrures 3 sont ensuite transférées sur le chantier de montage de miroir et mises en place sur la poutre 4 portée par le bâti-tournant 6. On procède de façon approchée à leur réglage en position, de la manière décrite ci-dessus, c'est-à-dire à l'aide des vis-tirants 15, en amenant les profilés cintrés 22 des membrures 3 en contact avec des contre-formes 35 d'un gabarit 36 (figures 14 et 15).

Comme décrit dans les demandes de brevet précitées, on procède ensuite au réglage final sur le chantier, en équipant les profilés cintrés 22 de mires éleotroniques 37 et le bâti-tournant 6 d'un prisme associé à un laser 38 (figure 16). En faisant tourner ce laser pour définir un plan de référence, il suffira d'amener ensuite les mires des différents profilés dans ce plan de référence à l'aide des organes de réglage déjà décrits.

## Revendications

1. Miroir solaire à panneaux réfléchissants (1) rectangulaires contigus, comprenant une armature rigide orientable par rapport á un bâti fixe (6) et porteuse de solives formées de membrures (3) parallàles entre elles, munies de profilés (22) cintrés (22) à la courbe du miroir, qui supportent eux-mêmes les grands côtés des panneaux (1), ce miroir étant caractérisé en ce que ladite armature est constituée d'une unique poutre porteuse (4) d'axe perpendiculaire auxdites membrures (3) et en ce que lesdites membrures comportent au moins un moyen de réglage en distance, par coulissement dans leur plan, par rapport à ladite poutre (4) et au moins un moyen de réglage en position angulaire, par pivotement dans leur, par rapport à ladite poutre (4).

2. Miroir solaire selon la revendication 1, caractérisé en ce que le moyen de réglage en distance et le moyen de réglage en position angu' laire des membrures (3) constituent un seul et même moyen comprenant, sur chaque membrure (3), deux glissères (13), entre lesquelles est disposée ladite poutre (4) et par rapport auxquelles sont montées coulissantes avec possibilité de verrouillage en position deux joues (10) solidaires de ladite poutre (4), deux vis-tirants (15) coopérant avec des écrous étant prévues sur ladite membure (3) pour régler sa position par rapport auxdites joues (10).

3. Miroir solaire selon la revendication 2, caractérise en ce que chacune desdite joues (10) comprend au moins une lumieère oblongue (11) dans laquelle est engagé un organe de verrouillage (12) monté coulissant dans la glissière (13) associée.

4. Miroir solaire selon l'une des revendications 2 et 3, caractérisé en ce que chacune desdites joues (10) comporte une patte (14), dont une partie formant crochet coiffe la via-tirant (15) associée et est verrouillée sur cette vis-tirant (15) par des écrous vissés sur ladite vis de chaque côté de la partie formant crochet de ladite patte (14).

5. Miroir solaire selon l'une des revendications 2 à 4, caractérisé en ce que l'axe de l'une des vis-tirants (15) passe au voisinage immédiat de l'áxe de pivotement du miroir, perpendiculairement audit axe de pivotement.

6. Miroir solaire selon l'une des revendications 1 à 5, caractérisé en ce que les profilés cintrés (22) qui supportent les grands côtés des panneaux réfléchissants (1) sont solidaires, par une articulation souple, de profilés auxiliaires (20) desdites membrures (3).

7. Miroir solaire selon la revendication 6, caractérisé en ce qu'une partie fendue du profilé auxiliaire (20) forme un étrier (21) et en ce que ladite articulation souple comprend, d'une part, un axe (23) disposé entre les branches de l'étrier (21) et engagé dans une lumière de l'âme dudit profilé cintré (22) et, d'autre part, deux rondelles élastiques (24) interposées entre les branches de l'étrier (21) et l'âme dudit profilé cintré (22).

**Patentansprüche**

1. Aus benachbarten, rechteckigen, reflektierenden Scheiben bestehender Solarspiegel mit einem starren bezüglich eines festen Ständers (6) ausrichtbaren Traggerüst für Querträger, die aus unter sich parallelen Gurten (3) bestehen, welche mit nach der Krümmung des Spiegels gewölbten Profilen (22) ausgerüstet sind, die ihrerseits die Langseiten der Scheiben (1) unterstützen, dadurch gekennzeichnet, daß das Traggerüst aus einem einzigen Tragbalken (4) mit zu den Gurten (3) senkrecht stehender Achse besteht und daß die Gurte wenigstens eine Vorrichtung zur Einstellung ihres Abstandes durch Verschieben in ihrer Ebene bezüglich des Tragbalkens (4) und wenigstens eine Vorrichtung zum Einstellen ihrer Winkelstellung durch Verdrehen in ihrer Ebene bezüglich des Tragbalkens (4) aufweisen.

2. Solarspiegel nach Anspruch 1, dadurch gekennzeichnet, daß die Vorrichtungen zur Abstandseinstellung und Winkeleinstellung der Gurte (3) aus ein und derselben Einrichtung bestehen, die auf jedem Gurt (3) zwei Gleitschienen (13) aufweist zwischen denen der Tragbalken (4) angeordnet ist und bezüglich deren zwei am Tragbalken (4) feste Backen (10) mit der Möglichkeit, sie am Ort zu verriegeln, verschiebbar montiert sind, wobei zwei mit Muttern zusammenwirkende Zugschrauben auf dem Gurt (3) zur Regelung seiner Einstellung bezüglich der Backen (10) vorgesehen sind.

3. Solarspiegel nach Anspruch 2, dadurch gekennzeichnet, daß jede der Backen (10) wenigstens ein Langloch (10) aufweist, in das ein auf der zugeordneten Gleitschiene (13) gleitendes Verriegelungsorgan (12) eingreift.

4. Solarspiegel nach einem der Ansprüche 2 und 3, dadurch gekennzeichnet, daß jede der Backen (10) eine Lasche (14) aufweist, deren einer einen Haken bildende Teil die zugehörige Zugschraube (15) überdeckt und auf dieser Zugschraube (15) durch auf diese Schraube beiderseits des den Haken bildenden Teils der Lasche (14) aufgeschraubte Muttern verriegelt ist.

5. Solarspiegel nach einem der Ansprüche 2 bis 4, dadurch gekennzeichnet, daß die Achse einer der Zugschrauben (15) in unmittelbarer Nachbarschaft zur Drehachse des Spiegels senkrecht zu dieser Drehachse verläuft.

6. Solarspiegel nach einem der Ansprüche 1 bis 5, dadurch gekennzeichnet, daß die gebogenen, die Langseiten der reflektierenden Scheiben (1) aufnehmenden Profile (22) durch ein federndes Gelenk formschlüssig mit Hilfsprofilen (20) der Gurte (3) verbunden sind.

7. Solarspiegel nach Anspruch 6, dadurch gekennzeichnet, daß ein geteilter Teil des Hilfsprofils (20) einen Bügel (21) bildet und daß das federnde Gelenk einerseits eine zwischen den Schenkeln des Bügels (21) angeordnete und in ein Schlitzloch im gebogenen Profil (22) greifende Achse (23) und andererseits zwei zwischen den Schenkeln des Bügels (21) und dem Schlitzloch des gebogenen Profils (22) eingesetzte Federringe (24) aufweist.

**Claims**

1. A solar mirror having contiguous rectangular reflecting panels (1) comprising a rigid armature orientable relative to a fixed support (6) and carrying limbs formed od arms (3) parallel to each other, provided with sections (22) curved to the curvature of the mirror which themselves support the longer sides of the panels (1), the mirror being characterised in that said armature is formed of a single carrying beam (4) having its axis perpendicular to said arms (3) and in that said arms comprise at least one means for adjustment with respect to distance by sliding in their plane relative to said beam (4) and at least one means for adjustment of angular position, by pivoting in their plane, relative to said beam (4).

2. A solar mirror according to claim 1, characterised in that the means for adjustment with respect to distance and the means for adjustment of angular position of the arms (3) form one and the same means comprising, on each arm (3), two slideways (13) between which said beam is arranged and relative to which there are slidingly mounted two jaws (10) which may be locked in position and joined to said beam (4), two threaded rods (15) cooperating with nuts being provided on said arm (3) to adjust ist position with respect to said jaws (10).

3. A solar mirror according to claim 2, characterised in that each of said jaws (10) comprises at least one oblong opening (11) in which is engaged a locking member (12) mounted to slide in the associated slideways (13).

4. A solar mirror according to one of claims 2 and 3, characterised in that each of said jaws (10) comprises a claw (14) of which a part forming a hook covers the associated threaded rod (15) and is locked to this threaded rod (15) by nuts screwed on the threaded rod on each side of the part forming the hock of said claw (14).

5. A solar mirror according to one of claims 2 to 4, characterised in that the axis of one of the threaded rods (15) passes in the immediate neighbourhood of the axis of pivoting of the mirror, perpendicularly to said axis of pivoting.

6. A solar mirror according to one of claims 1 to 5, characterised in that the curved sections (22) which support the longer sides of the reflecting panels (1) are connected, by a flexible articulation, to auxiliary sections (20) of said arms (3).

7. Solar mirror according to claim 6, characterised in that a split part of the auxiliary section (20) forms a shackle (21) and in that said flexible articulation comprises, on the one hand, an axis (23) arranged between the branches of the shackle (21) and engaged in an opening in the web of said curved section (22) and, on the other hand, two elastic rings (24) interposed between the branches of the shackle (21) and the web of said curved section (22).

FIG.1

FIG.5

9

FIG.2

FIG.14

FIG.15

FIG.16

FIG.4

FIG.3

FIG.6

FIG.7 FIG.8

FIG.9 FIG.10

FIG.11

FIG.12 FIG.13